# EUROPEAN PATENT APPLICATION

(11) **EP 4 564 037 A1**
(43) Date of publication of application: **04.06.2025**
(21) Application number: 22959851.1
(22) Date of filing: 27.09.2022
(51) Int. Cl.: G01R 31/396

(54) **THERMAL RUNAWAY EXPERIMENT DEVICE AND USE METHOD THEREFOR**

(71) Applicant: Contemporary Amperex Technology (Hong Kong) Limited, Central, Hong Kong (HK)
(72) Inventor: NIU, Fanchao, Ningde, Fujian 352100 (CN); CHENG, Rong, Ningde, Fujian 352100 (CN)
(74) Representative: Ziebig Hengelhaupt Intellectual Property Attorneys Patentanwaltskanzlei PartGmbB
(86) International application number: PCT/CN2022/121840
(87) International publication number: WO 2024/065202

(57) **Abstract**

The present application provides a thermal runaway experimental apparatus and a method for using the same, which belong to the field of battery technology. The thermal runaway experimental apparatus includes a heating mechanism and a cooling mechanism. The heating mechanism has a reaction chamber therein for accommodating a battery cell, the heating mechanism being configured to heat the battery cell to trigger thermal runaway of the battery cell. The cooling mechanism is configured to provide a cooling medium into the reaction chamber to cool the battery cell, such that the thermal runaway of the battery cell is terminated. This thermal runaway experimental apparatus can cool the battery cell and terminate the thermal runaway reaction at any stage or any temperature point during the thermal runaway experiment of the battery cell, thereby enabling the study of the internal reaction mechanism of the battery cell at any stage or any temperature point during the thermal runaway process. This is conducive to reducing the difficulty in revealing the causes of thermal runaway inside the battery cell, and thus enables the targeted discovery and resolution of the problem of thermal runaway in the battery cell, thereby contributing to providing an important theoretical reference for the safety design of the battery cell.

## Description

### TECHNICAL FIELD

The present application relates to the field of battery technology, and more particularly, to a thermal runaway experimental apparatus and a method for using the same.

### BACKGROUND

In recent years, new energy vehicles have made a leap forward in development. In the field of electric vehicles, power batteries, as the power source of electric vehicles, play an irreplaceable and important role. The battery mainly includes multiple battery cells. A battery cell is obtained by assembling a positive electrode plate, a negative electrode plate, and a separator into an electrode assembly (bare battery cell) through winding or stacking methods, then encasing it in a shell, and subsequently injecting electrolyte into it. With the vigorous promotion of new energy vehicles, the demand for the range of new energy vehicles has also increased, thereby raising the requirement for the specific capacity of battery cells. As a result, the probability of thermal runaway in battery cells is also increasing.

At present, to address the problem of thermal runaway in battery cells, the existing technology generally adopts experimental methods or thermal runaway mechanism research to investigate the causes of thermal runaway in battery cells. However, with the continuous upgrading of materials used in battery cell manufacturing, there are an increasing variety of materials for positive electrode plates and negative electrode plates, and types of electrolytes, which makes it increasingly difficult to reveal the causes and reaction mechanisms of thermal runaway inside battery cells. Consequently, it is not possible to effectively and specifically address the problem of thermal runaway in battery cells, which is not conducive to improving the safety of use of battery cells.

### SUMMARY OF THE INVENTION

The embodiments of the present application provide a thermal runaway experimental apparatus and a method for using the same, which can effectively reduce the difficulty in revealing the causes and reaction mechanisms of thermal runaway inside battery cells.

In a first aspect, an embodiment of the present application provides a thermal runaway experimental apparatus, including a heating mechanism and a cooling mechanism, where the heating mechanism has a reaction chamber therein for accommodating a battery cell, the heating mechanism being configured to heat the battery cell to trigger thermal runaway of the battery cell; and the cooling mechanism is configured to provide a cooling medium into the reaction chamber to cool the battery cell, such that the thermal runaway of the battery cell is terminated.

In the above technical solution, the thermal runaway experimental apparatus is provided with a heating mechanism and a cooling mechanism. The battery cell can be heated by the heating mechanism to trigger the thermal runaway reaction of the battery cell, and the cooling mechanism can provide a cooling medium into the reaction chamber, thereby cooling the battery cell to terminate the thermal runaway reaction of the battery cell. The thermal runaway experimental apparatus with such a structure can cool the battery cell at any stage or any temperature point during the thermal runaway experiment of the battery cell, so as to terminate the thermal runaway reaction of the battery cell, thereby enabling the study and revelation of the internal reaction mechanism of the battery cell at any stage or any temperature point during the thermal runaway process. This is conducive to reducing the difficulty in revealing the causes of thermal runaway inside the battery cell, and thus enables the effective and targeted discovery and resolution of the problem of thermal runaway in the battery cell, thereby contributing to providing an important theoretical reference for the safety design of the battery cell, so as to improve the safety of use of the battery cell.

In some embodiments, the cooling mechanism includes a storage unit and an injection unit, the injection unit being in communication with the storage unit, the storage unit being configured to provide the cooling medium to the injection unit, the injection unit being disposed within the reaction chamber, and the injection unit being configured to inject the cooling medium into the reaction chamber.

In the above technical solution, the cooling mechanism is provided with a storage unit and an injection unit. The storage unit can provide a cooling medium to the injection unit, so that the injection unit accommodated within the reaction chamber can inject the cooling medium into the reaction chamber to achieve a relatively good cooling effect on the battery cell. This cooling mechanism has a relatively simple structure and is easy to implement.

In some embodiments, the injection unit includes an injection pipe, the injection pipe having a medium flow channel formed therein, with the medium flow channel being in communication with the storage unit, and the injection pipe being provided with multiple injection holes in communication with the medium flow channel.

In the above technical solution, the injection unit is provided with an injection pipe for injecting a cooling medium into the reaction chamber. By communicating the injection pipe with the storage unit, the storage unit can provide the cooling medium to a medium flow channel of the injection pipe. Furthermore, the injection pipe is provided with multiple injection holes, so that the cooling medium within the medium flow channel can be injected into the reaction chamber through the injection holes. The injection unit with such a structure can achieve simultaneous injection of the cooling medium into the reaction chamber through the multiple injection holes, resulting in a relatively good injection effect, thereby facilitating the rapid cooling effect of the battery cell to terminate the thermal runaway reaction of the battery cell.

In some embodiments, the injection pipe is an annular pipe, and the multiple injection holes are arranged at intervals along an extension direction of the injection pipe.

In the above technical solution, by configuring the injection pipe as an annular pipe, that is, the injection pipe has an annular structure, and arranging multiple injection holes at intervals along the extension direction of the injection pipe, such that the multiple injection holes are circumferentially arranged on the injection pipe, the injection pipe with such a structure can inject the cooling medium toward the battery cell accommodated within the reaction chamber from multiple directions, which is beneficial for improving the cooling effect on the battery cell.

In some embodiments, the injection unit further includes multiple supporting members, the multiple supporting members being connected to the injection pipe, the multiple supporting members being arranged at intervals along the extension direction of the injection pipe, and the multiple supporting members being configured to cooperatively support the injection pipe.

In the above technical solution, the injection unit is further provided with multiple supporting members for supporting the injection pipe, where the multiple supporting members are all connected to the injection pipe and the multiple supporting members are arranged at intervals along the extension direction of the injection pipe. The injection unit with such a structure can, on the one hand, improve the stability of the injection pipe placed within the reaction chamber, facilitating the placement of the injection pipe within the reaction chamber, and on the other hand, enable the injection pipe to be suspended within the reaction chamber, thereby alleviating the phenomenon of contact between the injection pipe and the chamber wall of the reaction chamber, which is beneficial for reducing the impact of the high temperature of the chamber wall of the reaction chamber on the injection pipe.

In some embodiments, the supporting members are telescopic structures with adjustable length.

In the above technical solution, by configuring the supporting members of the injection unit, which are used to support the injection pipe, as telescopic structures with adjustable length, the length of the supporting members can be adjusted to adjust the height of the injection pipe. As a result, the height position of the injection pipe can be adjusted according to different experimental conditions to meet various experimental requirements.

In some embodiments, the hole diameter of the injection hole is D₁, satisfying 2 mm ≤ D₁ ≤ 3 mm.

In the above technical solution, by setting the hole diameter of the injection holes to be between 2 mm and 3 mm, the injection pipe with such a structure can, on the one hand, reduce the risk of the cooling medium blocking the injection holes caused by excessively small apertures of the injection holes, thereby ensuring the normal use of the injection pipe, and on the other hand, alleviate the phenomenon of insufficient pressure of the cooling medium within the medium flow channel of the injection pipe caused by excessively large apertures of the injection holes, which may result in an excessively small injection distance of the cooling medium or the inability of part of the injection holes to inject the cooling medium.

In some embodiments, the thickness of a pipe wall of the injection pipe is D₂, satisfying 1 mm ≤ D₂ < 2 mm.

In the above technical solution, by setting the thickness of the pipe wall of the injection pipe between 1 mm and 2 mm, on the one hand, this can alleviate the phenomenon of insufficient structural strength of the injection pipe caused by an excessively small thickness of the pipe wall of the injection pipe, thereby helping to reduce the risk of rupture or deformation damage of the injection pipe under the impact of the cooling medium; on the other hand, this can alleviate the phenomenon of material waste or excessively high manufacturing difficulty caused by an excessively large thickness of the pipe wall of the injection pipe, thereby helping to reduce the manufacturing cost of the injection pipe.

In some embodiments, the thermal runaway experimental apparatus further includes a placement frame, the placement frame being disposed within the reaction chamber, the placement frame being configured to place the battery cell, where the injection pipe is arranged around the placement frame, and the injection holes are arranged facing the placement frame.

In the above technical solution, a placement frame for placing the battery cell is provided within the reaction chamber of the heating mechanism, enabling the battery cell to be suspended within the reaction chamber, thereby alleviating the phenomenon of contact between the battery cell and the chamber wall of the reaction chamber, which is conducive to ensuring uniform heating of the battery cell. In addition, by arranging the injection pipe around the outer side of the placement frame and arranging the injection holes facing the placement frame, the injection holes can inject the cooling medium toward the battery cell from multiple directions, which is beneficial for improving the cooling effect of the cooling mechanism on the battery cell to stop the thermal runaway reaction of the battery cell.

In some embodiments, the position of the injection pipe is higher than that of the placement frame; and the injection pipe has a first central axis, the first central axis extending along an extension direction of the injection pipe, and the injection hole has a second central axis, with an angle between the second central axis and a plane in which the first central axis lies being α, satisfying 40° ≤ α ≤ 60°.

In the above technical solution, by arranging the position of the injection pipe higher than that of the placement frame, that is, the position of the injection pipe is higher than that of the battery cell, and setting the angle between the second central axis of the injection hole and the plane in which the first central axis of the injection pipe is located to be between 40 degrees and 60 degrees, the injection hole can be aligned to inject toward the battery cell placed on the placement frame, which is beneficial for improving the cooling effect on the battery cell.

In a second aspect, an embodiment of the present application further provides a method for using a thermal runaway experimental apparatus, which is applicable to the above-mentioned thermal runaway experimental apparatus. The method for using a thermal runaway experimental apparatus includes: placing a battery cell in the reaction chamber; heating the battery cell through the heating mechanism to trigger thermal runaway of the battery cell; and when the temperature T₁ of a surface of the battery cell reaches a preset temperature, stopping the heating of the battery cell by the heating mechanism, and providing a cooling medium into the reaction chamber through the cooling mechanism to cool the battery cell, such that the thermal runaway of the battery cell is terminated.

In some embodiments, after, when the temperature T₁ of a surface of the battery cell reaches a preset temperature, stopping the heating of the battery cell by the heating mechanism, and providing a cooling medium into the reaction chamber through the cooling mechanism to cool the battery cell, such that the thermal runaway of the battery cell is terminated, the method for using a thermal runaway experimental apparatus further includes: acquiring the temperature T₂ of the surface of the battery cell; and turning off the cooling mechanism when T₂ < 0°C.

In the above technical solution, when the obtained temperature T₂ on the surface of the battery cell is lower than 0°C, it can be preliminarily determined that the thermal runaway of the battery cell has been terminated, thereby enabling the cooling mechanism to stop providing the cooling medium into the reaction chamber, which is beneficial for reducing the waste of the cooling medium.

In some embodiments, after the turning off the cooling mechanism when T₂ < 0°C, the method for using a thermal runaway experimental apparatus further includes: after the battery cell is left to rest for a preset time, acquiring a temperature rise rate R of the surface of the battery cell, a temperature fluctuation M₁ of the surface of the battery cell, and a voltage fluctuation M₂ of the battery cell; and if R < 0.02°C/min, M₁ < 0.01°C, and M₂ < 0.01 V, removing the battery cell from the reaction chamber.

In the above technical solution, when the cooling mechanism is turned off and the battery cell is left to rest for a preset time, if the temperature rise rate R on the surface of the battery cell is less than 0.02°C/min, the temperature fluctuation M₁ on the surface of the battery cell is less than 0.01°C, and the voltage fluctuation M₂ of the battery cell is less than 0.01 V, it can be determined that the thermal runaway reaction of the battery cell has been terminated, thereby allowing the battery cell to be removed from the reaction chamber for subsequent research. This method can accurately identify that the thermal runaway of the battery cell has been terminated, ensuring that the battery cell is removed only after the thermal runaway reaction of the battery cell has been terminated, which is beneficial for improving the accuracy of subsequent research on the battery cell and reducing the risk of thermal runaway occurring after the battery cell is removed.

### BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
Fig. 1 is a structural schematic diagram of a thermal runaway experimental apparatus according to some embodiments of the present application;
Fig. 2 is an assembly schematic diagram of a heating mechanism and an injection unit of a thermal runaway experimental apparatus according to some embodiments of the present application;
Fig. 3 is a structural schematic diagram of an injection unit according to some embodiments of the present application;
Fig. 4 is a cross-sectional view of an injection pipe of an injection unit according to some embodiments of the present application;
Fig. 5 is an axonometric view of an injection unit according to some embodiments of the present application;
Fig. 6 is a partially enlarged view of portion A of the injection unit shown in Fig. 5;
Fig. 7 is a partial structural schematic diagram of a first supporting section of a supporting member according to some embodiments of the present application;
Fig. 8 is a schematic flowchart of a method for using a thermal runaway experimental apparatus according to some embodiments of the present application;
Fig. 9 is a schematic flowchart of a method for using a thermal runaway experimental apparatus according to some further embodiments of the present application; and
Fig. 10 is a schematic flowchart of a method for using a thermal runaway experimental apparatus according to still further embodiments of the present application.

Reference numerals: 100 - thermal runaway experimental apparatus; 10 - heating mechanism; 11 - reaction chamber; 20 - cooling mechanism; 21 - storage unit; 22 - injection unit; 221 - injection pipe; 2211 - medium flow channel; 2212 - injection hole; 2213 - first central axis; 2214 - second central axis; 222 - supporting member; 2221 - first supporting section; 2221a - threaded hole; 2222 - second supporting section; 2222a - external thread; 23 - connecting pipe; 30 - battery cell; 40 - placement frame; x - extension direction of the supporting member.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. The terms "first", "second", etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the phrase "multiple" means two or more.

In the present application, the battery cell may include a lithium-ion secondary battery, a lithium-ion primary battery, a lithium-sulfur battery, a sodium-ion battery, or a magnesium-ion battery, etc., which is not limited in embodiments of the present application. The battery cell may be in a cylindrical shape, a flat shape, a cuboid shape or another shape, which is also not limited in the embodiments of the present application. The battery cells are generally classified into three types depending on the way of package: cylindrical battery cells, prismatic battery cells and pouch battery cells, which are also not limited in the embodiments of the present application.

The battery cell includes a shell, an electrode assembly, and an electrolyte, where the electrode assembly and the electrolyte are both accommodated within the shell. The electrode assembly is the component in the battery cell where electrochemical reactions occur, and the electrode assembly is composed of a positive electrode plate, a negative electrode plate, and a separator. The battery cell operates mainly relying on movement of metal ions between the positive electrode plate and the negative electrode plate. The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, etc. The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab. The material of the negative electrode current collector may be copper, and the negative electrode active material may be carbon, silicon, etc. In order to ensure that no fusing occurs when a large current passes, there are multiple positive tabs which are stacked together, and there are multiple negative tabs which are stacked together.

The separator may be polypropylene (PP), polyethylene (PE), etc. In addition, the electrode assembly may have a wound structure or a stacked structure, but the embodiments of the present application are not limited thereto.

The battery has outstanding advantages such as high energy density, low environmental pollution, high power density, long service life, wide adaptability, and low self-discharge coefficient, making it an important component of today's new energy development. With the continuous advancement of battery technology, higher requirements have been proposed in terms of battery range and safety of use. Among them, the battery is composed of multiple battery cells, making the specific capacity and safety of use of the battery cells the determining factors for the range and safety of use of the battery.

The inventors have found that, for a general battery cell, the higher the specific capacity of the battery cell, the greater the probability of thermal runaway occurring during the use of the battery cell. In order to study the mechanism of thermal runaway in battery cells and fundamentally solve the problem of thermal runaway in battery cells, in the prior art, an accelerated rate calorimeter (ARC) is usually used to conduct adiabatic thermal runaway experiments on battery cells. By performing three repeated processes-heating, waiting, and searching-on the battery cell to simulate the thermal characteristics of the exothermic reaction process, during which the internal heat of the battery cell cannot dissipate in time, an approximately adiabatic environment can be provided to make the reaction closer to the real reaction process. This, in turn, allows for the acquisition of kinetic parameters of the apparent exothermic reaction of the battery cell under thermal runaway conditions, enabling the study of the mechanism of thermal runaway in battery cells. However, the existing accelerated rate calorimeter (ARC) cannot perform cooling termination at any stage or at a specified temperature point during the thermal runaway experiment on a battery cell, and it can only study and explore the internal reaction mechanism of the battery cell after the thermal runaway has ended, thus failing to meet the research needs for thermal runaway in the battery cell and resulting in greater difficulty in uncovering the causes and reaction mechanisms of thermal runaway inside the battery cell, hindering the effective and targeted discovery and resolution of the problem of thermal runaway in the battery cell, which is detrimental to the improvement of the safety design of the battery cell.

Based on the above considerations, in order to solve the problem of the difficulty in uncovering the causes and reaction mechanisms of thermal runaway inside battery cells, the inventors, through in-depth research, has designed a thermal runaway experimental apparatus, which includes a heating mechanism and a cooling mechanism. The heating mechanism has a reaction chamber therein for accommodating a battery cell, the heating mechanism being configured to heat the battery cell to trigger thermal runaway of the battery cell. The cooling mechanism is configured to provide a cooling medium into the reaction chamber to cool the battery cell, such that the thermal runaway of the battery cell is terminated.

In a thermal runaway experimental apparatus with such as structure, the thermal runaway experimental apparatus is provided with a heating mechanism and a cooling mechanism. The battery cell can be heated by the heating mechanism to trigger the thermal runaway reaction of the battery cell, and the cooling mechanism can provide a cooling medium into the reaction chamber, thereby cooling the battery cell to terminate the thermal runaway reaction of the battery cell. The thermal runaway experimental apparatus with such a structure can cool the battery cell at any stage or any temperature point during the thermal runaway experiment of the battery cell, so as to terminate the thermal runaway reaction of the battery cell, thereby enabling the study and revelation of the internal reaction mechanism of the battery cell at any stage or any temperature point during the thermal runaway process. This is conducive to reducing the difficulty in revealing the causes of thermal runaway inside the battery cell, and thus enables the effective and targeted discovery and resolution of the problem of thermal runaway in the battery cell, thereby contributing to providing an important theoretical reference for the safety design of the battery cell, so as to improve the safety of use of the battery cell.

The embodiment of the present application provides a thermal runaway experimental apparatus, which is capable of addressing the problem in the prior art where cooling termination cannot be performed at any stage or at a specified temperature point during the thermal runaway experiment on a battery cell, and the internal reaction mechanism of the battery cell can only be performed after the thermal runaway has ended can be studied and explored, thus failing to meet the research needs for thermal runaway in the battery cell and resulting in greater difficulty in uncovering the causes and reaction mechanisms of thermal runaway inside the battery cell. The specific structure of the thermal runaway experimental apparatus will be illustrated in detail below in conjunction with the accompanying drawings.

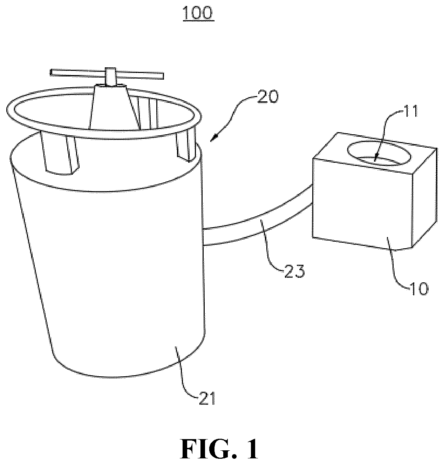

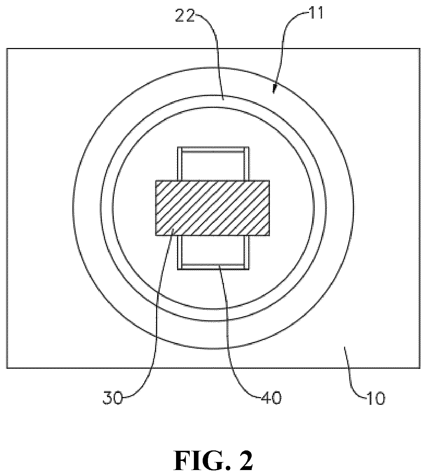

According to some embodiments of the present application, referring to Figs. 1 and 2, Fig. 1 is a structural schematic diagram of a thermal runaway experimental apparatus 100 according to some embodiments of the present application, and Fig. 2 is an assembly schematic diagram of a heating mechanism 10 and an injection unit 22 of a thermal runaway experimental apparatus 100 according to some embodiments of the present application. The present application provides a thermal runaway experimental apparatus 100, the thermal runaway experimental apparatus 100 including a heating mechanism 10 and a cooling mechanism 20. The heating mechanism 10 has a reaction chamber 11 therein for accommodating a battery cell 30, the heating mechanism 10 being configured to heat the battery cell 30 to trigger thermal runaway of the battery cell 30. The cooling mechanism 20 is configured to provide a cooling medium into the reaction chamber 11 to cool the battery cell 30, such that the thermal runaway of the battery cell 30 is terminated.

The heating mechanism 10 can be an accelerated rate calorimeter (ARC) or the like. By placing the battery cell 30 inside the chamber of the accelerated rate calorimeter, thermal runaway experiments can be conducted on the battery cell 30 through the accelerated rate calorimeter. For the specific structure of the accelerated rate calorimeter, reference can be made to the related art, which will not be described further here.

The cooling mechanism 20 serves to provide a cooling medium to the reaction chamber 11 of the heating mechanism 10, in order to cool the battery cell 30 undergoing thermal runaway. Optionally, the cooling medium provided by the cooling mechanism 20 can be of various types, such as liquid nitrogen, liquid helium, or dry ice. By way of example, in an embodiment of the present application, the cooling medium provided by the cooling mechanism 20 is liquid nitrogen. The cooling medium with such a structure has a good cooling effect and does not cause pollution to the external environment.

The thermal runaway experimental apparatus 100 is provided with a heating mechanism 10 and a cooling mechanism 20. The battery cell 30 can be heated by the heating mechanism 10 to trigger the thermal runaway reaction of the battery cell 30, and the cooling mechanism 20 can provide a cooling medium into the reaction chamber 11, thereby cooling the battery cell 30 to terminate the thermal runaway reaction of the battery cell 30. The thermal runaway experimental apparatus 100 with such a structure can cool the battery cell 30 at any stage or any temperature point during the thermal runaway experiment of the battery cell 30, so as to terminate the thermal runaway reaction of the battery cell 30, thereby enabling the study and revelation of the internal reaction mechanism of the battery cell 30 at any stage or any temperature point during the thermal runaway process. This is conducive to reducing the difficulty in revealing the causes of thermal runaway inside the battery cell 30, and thus enables the effective and targeted discovery and resolution of the problem of thermal runaway in the battery cell 30, thereby contributing to providing an important theoretical reference for the safety design of the battery cell 30, so as to improve the safety of use of the battery cell 30.

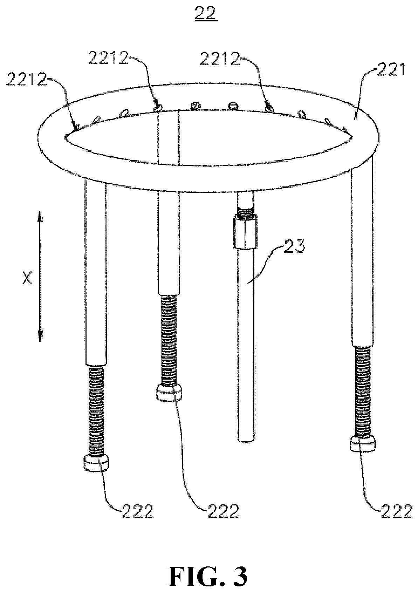

According to some embodiments of the present application, referring to Figs. 1 and 2 and further referring to Fig. 3, Fig. 3 is a structural schematic diagram of an injection unit 22 according to some embodiments of the present application. The cooling mechanism 20 includes a storage unit 21 and an injection unit 22, the injection unit 22 being in communication with the storage unit 21, the storage unit 21 being configured to provide the cooling medium to the injection unit 22, the injection unit 22 being disposed within the reaction chamber 11, and the injection unit 22 being configured to inject the cooling medium into the reaction chamber 11.

The storage unit 21 serves to store the cooling medium, thereby enabling it to provide the cooling medium to the injection unit 22. By way of example, since the cooling mechanism 20 is configured to provide liquid nitrogen as the cooling medium to the reaction chamber 11, the storage unit 21 is a liquid nitrogen tank, and the interior of the storage unit 21 stores compressed liquid nitrogen. This allows the storage unit 21 to provide the cooling medium to the injection unit 22, enabling the injection unit 22 to inject the cooling medium into the reaction chamber 11.

In some embodiments, the cooling mechanism 20 further includes a connecting pipe 23, where the connecting pipe 23 is connected between the storage unit 21 and the injection unit 22 to enable communication between the storage unit 21 and the injection unit 22.

The cooling mechanism 20 is provided with a storage unit 21 and an injection unit 22. The storage unit 21 can provide a cooling medium to the injection unit 22, so that the injection unit 22 accommodated within the reaction chamber 11 can inject the cooling medium into the reaction chamber 11 to achieve a relatively good cooling effect on the battery cell 30. This cooling mechanism 20 has a relatively simple structure and is easy to implement.

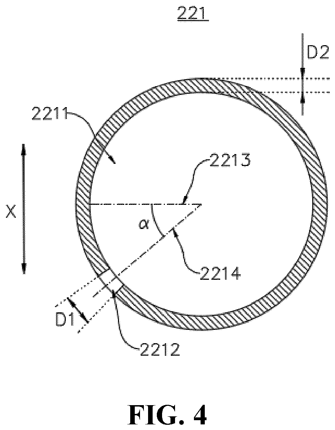

According to some embodiments of the present application, please refer to Fig. 3 and further refer to Fig. 4. Fig. 4 is a cross-sectional view of an injection pipe 221 of an injection unit 22 according to some embodiments of the present application. The injection unit 22 includes an injection pipe 221, the injection pipe 221 having a medium flow channel 2211 formed therein, with the medium flow channel 2211 being in communication with the storage unit 21, and the injection pipe 221 being provided with multiple injection holes 2212 in communication with the medium flow channel 2211.

The injection pipe 221 is connected to the storage unit 21 through the connecting pipe 23, such that the medium flow channel 2211 inside the injection pipe 221 is in communication with the storage unit 21. Therefore, after the storage unit 21 provides the cooling medium into the medium flow channel 2211, the cooling medium can be injected into the reaction chamber 11 of the heating mechanism 10 through the injection hole 2212.

By way of example, the material of the injection pipe 221 can be of various types, such as steel, copper, or iron.

The injection unit 22 is provided with an injection pipe 221 for injecting a cooling medium into the reaction chamber 11. By communicating the injection pipe 221 with the storage unit 21, the storage unit 21 can provide the cooling medium to a medium flow channel 2211 of the injection pipe 221. Furthermore, the injection pipe 221 is provided with multiple injection holes 2212, so that the cooling medium within the medium flow channel 2211 can be injected into the reaction chamber 11 through the injection holes 2212. The injection unit 22 with such a structure can achieve simultaneous injection of the cooling medium into the reaction chamber 11 through the multiple injection holes 2212, resulting in a relatively good injection effect, thereby facilitating the rapid cooling effect of the battery cell 30 to terminate the thermal runaway reaction of the battery cell 30.

In some embodiments, as shown in Fig. 3, the injection pipe 221 is an annular pipe, and the multiple injection holes 2212 are arranged at intervals along an extension direction of the injection pipe 221.

By way of example, in Fig. 3, the injection pipe 221 has a circular annular structure, and the multiple injection holes 2212 are arranged at intervals along the circumferential direction of the injection pipe 221, that is, the injection pipe 221 is a structure connected end to end. Of course, in other embodiments, the injection pipe 221 may also have a rectangular annular structure, a triangular annular structure, or an elliptical annular structure. It can be understood that the injection pipe 221 may also have a non-annular structure. For example, the injection pipe 221 is a strip-shaped structure, an L-shaped structure, or a U-shaped structure.

By configuring the injection pipe 221 as an annular pipe, that is, the injection pipe 221 has an annular structure, and arranging multiple injection holes 2212 at intervals along the extension direction of the injection pipe 221, such that the multiple injection holes 2212 are circumferentially arranged on the injection pipe 221, the injection pipe 221 with such a structure can inject the cooling medium toward the battery cell 30 accommodated within the reaction chamber 11 from multiple directions, which is beneficial for improving the cooling effect on the battery cell 30.

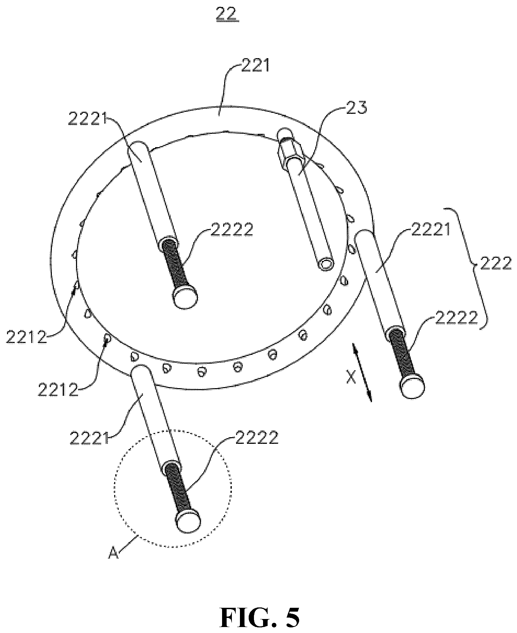

According to some embodiments of the present application, referring to Fig. 3 and further referring to Fig. 5, Fig. 5 is an axonometric view of an injection unit 22 according to some embodiments of the present application. The injection unit 22 further includes multiple supporting members 222, the multiple supporting members 222 being connected to the injection pipe 221, the multiple supporting members 222 being arranged at intervals along the extension direction of the injection pipe 221, and the multiple supporting members 222 being configured to cooperatively support the injection pipe 221.

The multiple supporting members 222 are arranged at intervals along the extension direction of the injection pipe 221, that is, the direction of arrangement of the multiple supporting members 222 is the extension direction of the injection pipe 221.

By way of example, in Fig. 3, the injection unit 22 is provided with three supporting members 222, the three supporting members 222 being arranged at intervals along the circumferential direction of the injection pipe 221. The injection unit 22 with such a structure has higher structural stability. Of course, in other embodiments, the number of the supporting members 222 may also be four, five, six, and so on.

The injection unit 22 is further provided with multiple supporting members 222 for supporting the injection pipe 221, where the multiple supporting members 222 are all connected to the injection pipe 221 and the multiple supporting members 222 are arranged at intervals along the extension direction of the injection pipe 221. The injection unit 22 with such a structure can, on the one hand, improve the stability of the injection pipe 221 placed within the reaction chamber 11, facilitating the placement of the injection pipe 221 within the reaction chamber 11, and on the other hand, enable the injection pipe 221 to be suspended within the reaction chamber 11, thereby alleviating the phenomenon of contact between the injection pipe 221 and the chamber wall of the reaction chamber 11, which is beneficial for reducing the impact of the high temperature of the chamber wall of the reaction chamber 11 on the injection pipe 221.

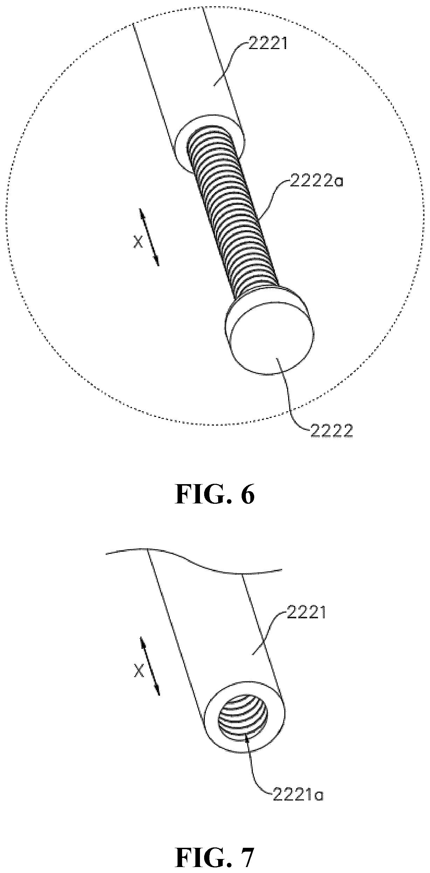

In some embodiments, referring to Figs. 3 and 5 and further referring to Figs. 6 and 7, Fig. 6 is a partially enlarged view of portion A of the injection unit 22 shown in Fig. 5, and Fig. 7 is a partial structural schematic diagram of a first supporting section 2221 of a supporting member 222 according to some embodiments of the present application. The supporting member 222 is a telescopic structure with adjustable length.

Specifically, the supporting member 222 is a telescopic structure with adjustable length, which means that the length of the supporting member 222 can be adjusted. In other words, in the extension direction X of the supporting member, the height position of the injection pipe 221 can be adjusted.

Optionally, the structure of the supporting member 222 can be of various types. For example, in Figs. 6 and 7, the supporting member 222 includes a first supporting section 2221 and a second supporting section 2222. In the extension direction X of the supporting member, one end of the first supporting section 2221 is connected to the injection pipe 221, while the other end is provided with a threaded hole 2221a. The outer peripheral surface of the second supporting section 2222 is provided with external threads 2222a, and the second supporting section 2222 is screwed into the threaded hole 2221a of the first supporting section 2221. By tightening or loosening the second supporting section 2222, the length of the supporting member 222 can be adjusted. Of course, in other embodiments, the supporting member 222 can also adopt other structures. For instance, the first supporting section 2221 can be sleeved on the outer side of the second supporting section 2222, with multiple snap-fit holes provided on the first supporting section 2221 that are arranged at intervals along the extension direction X of the supporting member. The outer peripheral face of the second supporting section 2222 is provided with a snap-fit block, and by engaging the snap-fit block in different snap-fit holes, the adjustment of the length of the supporting member 222 can be achieved.

By configuring the supporting members 222 of the injection unit 22, which are used to support the injection pipe 221, as telescopic structures with adjustable length, the length of the supporting members 222 can be adjusted to adjust the height of the injection pipe 221. As a result, the height position of the injection pipe 221 can be adjusted according to different experimental conditions to meet various experimental requirements.

According to some embodiments of the present application, as shown in Fig. 4, the hole diameter of the injection hole 2212 is D₁, satisfying 2 mm ≤ D₁ ≤ 3 mm.

The hole diameter of the injection hole 2212 is D₁, that is, the size of the diameter of the injection hole 2212.

By setting the hole diameter of the injection holes 2212 to be between 2 mm and 3 mm, the injection pipe 221 with such a structure can, on the one hand, reduce the risk of the cooling medium blocking the injection holes 2212 caused by excessively small apertures of the injection holes 2212, thereby ensuring the normal use of the injection pipe 221, and on the other hand, alleviate the phenomenon of insufficient pressure of the cooling medium within the medium flow channel 2211 of the injection pipe 221 caused by excessively large apertures of the injection holes 2212, which may result in an excessively small injection distance of the cooling medium or the inability of part of the injection holes 2212 to inject the cooling medium.

According to some embodiments of the present application, as shown in Fig. 4, the thickness of a pipe wall of the injection pipe 221 is D₂, satisfying 1 mm ≤ D₂ ≤ 2 mm.

The thickness of the pipe wall of the injection pipe 221 is D₂, which refers to the distance between the outer wall face and the inner wall face of the injection pipe 221 in the radial direction of the injection pipe 221.

By setting the thickness of the pipe wall of the injection pipe 221 between 1 mm and 2 mm, on the one hand, this can alleviate the phenomenon of insufficient structural strength of the injection pipe 221 caused by an excessively small thickness of the pipe wall of the injection pipe 221, thereby helping to reduce the risk of rupture or deformation damage of the injection pipe 221 under the impact of the cooling medium; on the other hand, this can alleviate the phenomenon of material waste or excessively high manufacturing difficulty caused by an excessively large thickness of the pipe wall of the injection pipe 221, thereby helping to reduce the manufacturing cost of the injection pipe 221.

According to some embodiments of the present application, as shown in Figs. 2 and 3, the thermal runaway experimental apparatus 100 further includes a placement frame 40, where the placement frame 40 is disposed within the reaction chamber 11 and the placement frame 40 is configured to place the battery cell 30. The injection pipe 221 is arranged around the placement frame 40, and the injection holes 2212 are arranged facing the placement frame 40.

The injection pipe 221 is arranged around the placement frame 40, and the injection holes 2212 are arranged facing the placement frame 40, that is, the injection pipe 221 is positioned around the outer side of the placement frame 40, and the injection holes 2212 are provided on the side of the injection pipe 221 that faces the placement frame 40.

A placement frame 40 for placing the battery cell 30 is provided within the reaction chamber 11 of the heating mechanism 10, enabling the battery cell 30 to be suspended within the reaction chamber 11, thereby alleviating the phenomenon of contact between the battery cell 30 and the chamber wall of the reaction chamber 11, which is conducive to ensuring uniform heating of the battery cell 30. In addition, by arranging the injection pipe 221 around the outer side of the placement frame 40 and arranging the injection holes 2212 facing the placement frame 40, the injection holes 2212 can inject the cooling medium toward the battery cell 30 from multiple directions, which is beneficial for improving the cooling effect of the cooling mechanism 20 on the battery cell 30 to stop the thermal runaway reaction of the battery cell 30.

In some embodiments, as shown in Figs. 2, 3, and 4, the position of the injection pipe 221 is higher than that of the placement frame 40, and the injection pipe 221 has a first central axis 2213, the first central axis 2213 extending along an extension direction of the injection pipe 221, and the injection hole 2212 has a second central axis 2214, with an angle between the second central axis 2214 and a plane in which the first central axis 2213 lies being α, satisfying 40° ≤ α ≤ 60°.

The position of the injection pipe 221 is higher than that of the placement frame 40, that is, in the extension direction X of the supporting member, the position of the injection pipe 221 is higher than that of the placement frame 40, such that the position of the injection pipe 221 is higher than that of the battery cell 30 placed on the placement frame 40.

The first central axis 2213 is the central axis of the medium flow channel 2211 of the injection pipe 221, that is, the first central axis 2213 is formed by connecting the central points of the cross-sections of the multiple injection pipes 221. The plane in which the first central axis 2213 lies, i.e., the plane defined by the central points of the cross-sections of the multiple injection pipes 221, is also a plane perpendicular to the extension direction X of the supporting member.

By arranging the position of the injection pipe 221 higher than that of the placement frame 40, that is, the position of the injection pipe 221 is higher than that of the battery cell 30, and setting the angle between the second central axis 2214 of the injection hole 2212 and the plane in which the first central axis 2213 of the injection pipe 221 is located to be between 40 degrees and 60 degrees, the injection hole 2212 can be aligned to inject toward the battery cell 30 placed on the placement frame 40, which is beneficial for improving the cooling effect on the battery cell 30.

According to some embodiments of the present application, referring to Figs. 1 to 7, the present application provides a thermal runaway experimental apparatus 100, where the thermal runaway experimental apparatus 100 includes a heating mechanism 10, a cooling mechanism 20, and a placement frame 40. The heating mechanism 10 has a reaction chamber 11 therein for accommodating a battery cell 30, the heating mechanism 10 being configured to heat the battery cell 30 to trigger thermal runaway of the battery cell 30. The cooling mechanism 20 includes a storage unit 21 and an injection unit 22, where the injection unit 22 includes an injection pipe 221 and multiple supporting members 222, the injection pipe 221 having a medium flow channel 2211 formed therein, with the medium flow channel 2211 being in communication with the storage unit 21, and the storage unit 21 is configured to provide cooling medium to the injection unit 22, the injection pipe 221 being provided with multiple injection holes 2212 in communication with the medium flow channel 2211. The injection pipe 221 is an annular pipe, with multiple injection holes 2212 arranged at intervals along the extension direction of the injection pipe 221. The multiple supporting members 222 are connected to the injection pipe 221, and the multiple supporting members 222 are arranged at intervals along the extension direction of the injection pipe 221. The multiple supporting members 222 are configured to cooperatively support the injection pipe 221, and the supporting members 222 are telescopic structures with adjustable length. The placement frame 40 is arranged inside the reaction chamber 11 and the placement frame 40 is configured to hold the battery cell 30. The injection pipe 221 is arranged around the placement frame 40, and the injection holes 2212 are arranged facing the placement frame 40. The position of the injection pipe 221 is higher than that of the placement frame 40, and the injection pipe 221 has a first central axis 2213, the first central axis 2213 extending along an extension direction of the injection pipe 221, and the injection hole 2212 has a second central axis 2214, with an angle between the second central axis 2214 and a plane in which the first central axis 2213 lies being α, satisfying 40° ≤ α ≤ 60°.

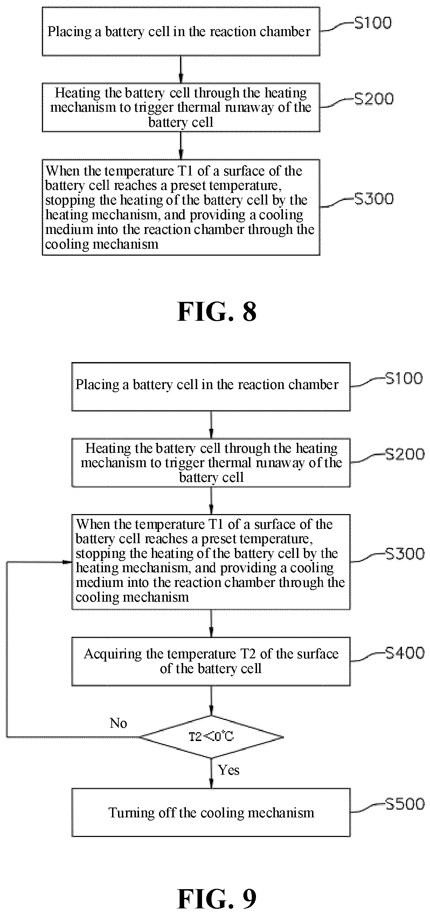

According to some embodiments of the present application, the embodiments of the present application further provide a method for using the thermal runaway experimental apparatus 100, which is applicable to the above thermal runaway experimental apparatus 100. Referring to Fig. 8, Fig. 8 is a schematic flowchart of a method for using the thermal runaway experimental apparatus 100 according to some embodiments of the present application. The method for using the thermal runaway experimental apparatus 100 includes:
S100: placing a battery cell 30 in the reaction chamber 11;
S200: heating the battery cell 30 through the heating mechanism 10 to trigger thermal runaway of the battery cell 30; and
S300: when the temperature T₁ of a surface of the battery cell 30 reaches a preset temperature, stopping the heating of the battery cell 30 by the heating mechanism 10, and providing a cooling medium into the reaction chamber 11 through the cooling mechanism 20 to cool the battery cell 30, such that the thermal runaway of the battery cell 30 is terminated.

The initial temperature inside the reaction chamber 11 of the heating mechanism 10 is generally 40°C, the final temperature is 300°C, with a step temperature of 5°C, and the mode is heat-wait-search. When the temperature rise rate of the surface of the battery cell 30 is detected to be greater than 0.02°C/min, the heating mechanism 10 will track the temperature of the surface of the battery cell 30, maintaining consistent temperature to simulate an adiabatic environment. For the thermal runaway experiment of the battery cell 30, reference can be made to the related art, which will not be repeated here.

It should be noted that when the temperature T₁ of the surface of the battery cell 30 reaches a preset temperature, the heating mechanism 10 stops heating the battery cell 30 and provides a cooling medium into the reaction chamber 11 through the cooling mechanism 20. The preset temperature is the target temperature at which researchers intend to study the thermal runaway of the battery cell 30. When the temperature of the surface of the battery cell 30 reaches the target temperature, the battery cell 30 is cooled by the cooling mechanism 20 to terminate the thermal runaway reaction of the battery cell 30.

According to some embodiments of the present application, referring to Fig. 9, Fig. 9 is a schematic flowchart of a method for using a thermal runaway experimental apparatus 100 according to some further embodiments of the present application. After, when the temperature T₁ of a surface of the battery cell 30 reaches a preset temperature, stopping the heating of the battery cell 30 by the heating mechanism 10, and providing a cooling medium into the reaction chamber 11 through the cooling mechanism 20 to cool the battery cell 30, such that the thermal runaway of the battery cell 30 is terminated, the method for using a thermal runaway experimental apparatus 100 further includes:
S400: acquiring the temperature T₂ of the surface of the battery cell 30; and
S500: turning off the cooling mechanism 20 when T₂ < 0°C.

When the obtained temperature T₂ on the surface of the battery cell 30 is lower than 0°C, it can be preliminarily determined that the thermal runaway of the battery cell 30 has been terminated, thereby enabling the cooling mechanism 20 to stop providing the cooling medium into the reaction chamber 11**,** which is beneficial for reducing the waste of the cooling medium.

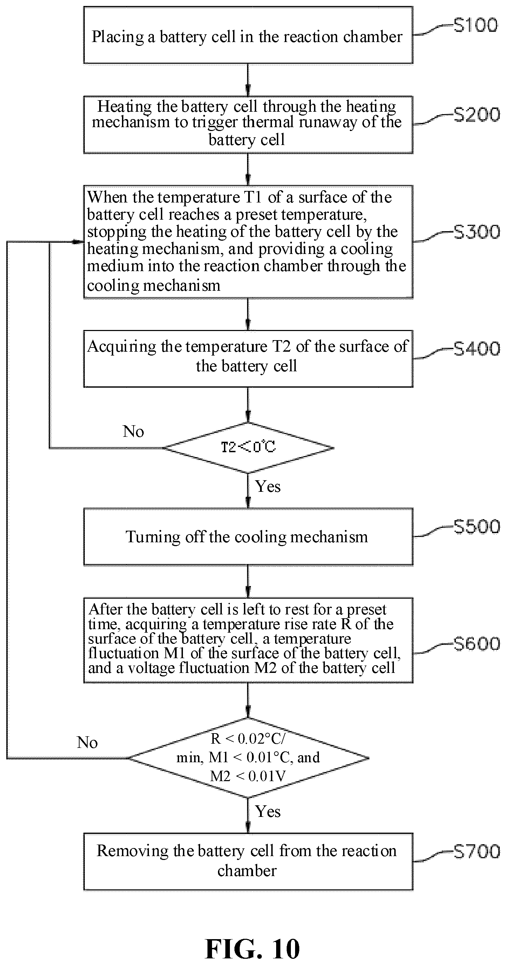

According to some embodiments of the present application, referring to Fig. 10, Fig. 10 is a schematic flowchart of a method for using a thermal runaway experimental apparatus 100 according to still further embodiments of the present application. After the turning off the cooling mechanism 20 when T₂ < 0°C, the method for using a thermal runaway experimental apparatus 100 further includes:
S600: after the battery cell 30 is left to rest for a preset time, acquiring a temperature rise rate R of the surface of the battery cell 30, a temperature fluctuation M₁ of the surface of the battery cell 30, and a voltage fluctuation M₂ of the battery cell 30; and
S700: if R < 0.02°C/min, M₁ < 0.01°C, and M₂ < 0.01 V, removing the battery cell 30 from the reaction chamber 11.

In step S600, after the battery cell 30 is left to rest for the preset time, the temperature fluctuation M₁ of the surface the battery cell 30 is measured after the temperature of the battery cell 30 and the ambient temperature reach equilibrium. In other words, the temperature fluctuation M₁ of the surface of the battery cell 30 refers to the temperature fluctuation after the temperature of the battery cell 30 has equilibrated with the ambient temperature.

By way of example, in step S600, the resting time of the battery cell 30 within the reaction chamber 11 is 1 hour, that is, the preset time is 1 hour. Of course, in other embodiments, the preset time may also be 50 minutes, 1.5 hours, 2 hours, or the like.

When the cooling mechanism 20 is turned off and the battery cell 30 is left to rest for a preset time, if the temperature rise rate R on the surface of the battery cell 30 is less than 0.02°C/min, the temperature fluctuation M₁ on the surface of the battery cell 30 is less than 0.01°C, and the voltage fluctuation M₂ of the battery cell 30 is less than 0.01 V, it can be determined that the thermal runaway reaction of the battery cell 30 has been terminated, thereby allowing the battery cell 30 to be removed from the reaction chamber 11 for subsequent research. This method can accurately identify that the thermal runaway of the battery cell 30 has been terminated, ensuring that the battery cell 30 is removed only after the thermal runaway reaction of the battery cell 30 has been terminated, which is beneficial for improving the accuracy of subsequent research on the battery cell 30 and reducing the risk of thermal runaway occurring after the battery cell 30 is removed.

It should be noted that in case of no conflicts, the embodiments in the present application and features in the embodiments may be combined with each other.

The above are only preferred examples of the present application, and are not intended to limit the present application. For those skilled in the art, the present application may have various modifications and changes. Any modification, equivalent replacement, improvement, etc. made within the spirit and principle of the present application shall fall within the scope of protection of the present application.

## Claims

1. A thermal runaway experimental apparatus, comprising:
a heating mechanism having a reaction chamber therein for accommodating a battery cell, the heating mechanism being configured to heat the battery cell to trigger thermal runaway of the battery cell; and
a cooling mechanism configured to provide a cooling medium into the reaction chamber to cool the battery cell, such that the thermal runaway of the battery cell is terminated.

2. The thermal runaway experimental apparatus according to claim 1, wherein the cooling mechanism comprises a storage unit and an injection unit, the injection unit being in communication with the storage unit, the storage unit being configured to provide the cooling medium to the injection unit, the injection unit being disposed within the reaction chamber, and the injection unit being configured to inject the cooling medium into the reaction chamber.

3. The thermal runaway experimental apparatus according to claim 2, wherein the injection unit comprises:
an injection pipe having a medium flow channel formed therein, with the medium flow channel being in communication with the storage unit, and the injection pipe being provided with multiple injection holes in communication with the medium flow channel.

4. The thermal runaway experimental apparatus according to claim 3, wherein the injection pipe is an annular pipe, and the multiple injection holes are arranged at intervals along an extension direction of the injection pipe.

5. The thermal runaway experimental apparatus according to claim 4, wherein the injection unit further comprises:
multiple supporting members connected to the injection pipe, the multiple supporting members being arranged at intervals along the extension direction of the injection pipe, and the multiple supporting members being configured to cooperatively support the injection pipe.

6. The thermal runaway experimental apparatus according to claim 5, wherein the supporting members are telescopic structures with adjustable length.

7. The thermal runaway experimental apparatus according to any one of claims 3 to 6, wherein the hole diameter of the injection hole is D₁, satisfying 2 mm ≤ D₁ ≤ 3 mm.

8. The thermal runaway experimental apparatus according to any one of claims 3 to 7, wherein the thickness of a pipe wall of the injection pipe is D₂, satisfying 1 mm ≤ D₂ ≤ 2 mm.

9. The thermal runaway experimental apparatus according to any one of claims 3 to 8, wherein the thermal runaway experimental apparatus further comprising:
a placement frame disposed within the reaction chamber, the placement frame being configured to place the battery cell;
wherein the injection pipe is arranged around the placement frame, and the injection holes are arranged facing the placement frame.

10. The thermal runaway experimental apparatus according to claim 9, wherein the position of the injection pipe is higher than that of the placement frame; and
the injection pipe has a first central axis, the first central axis extending along the extension direction of the injection pipe, and the injection hole has a second central axis, with an angle between the second central axis and a plane in which the first central axis lies being α, satisfying 40° ≤ α ≤ 60°.

11. A method for using a thermal runaway experimental apparatus, applicable to the thermal runaway experimental apparatus according to any one of claims 1 to 10, the method for using the thermal runaway experimental apparatus comprising:
placing the battery cell in the reaction chamber;
heating the battery cell through the heating mechanism to trigger thermal runaway of the battery cell; and
when the temperature T₁ of a surface of the battery cell reaches a preset temperature, stopping the heating of the battery cell by the heating mechanism, and providing the cooling medium into the reaction chamber through the cooling mechanism to cool the battery cell, such that the thermal runaway of the battery cell is terminated.

12. The method for using a thermal runaway experimental apparatus according to claim 11, wherein after, when the temperature T₁ of the surface of the battery cell reaches the preset temperature, stopping the heating of the battery cell by the heating mechanism, and providing the cooling medium into the reaction chamber through the cooling mechanism to cool the battery cell, such that the thermal runaway of the battery cell is terminated, the method for using the thermal runaway experimental apparatus further comprises:
acquiring the temperature T₂ of the surface of the battery cell; and
turning off the cooling mechanism when T₂ < 0°C.

13. The method for using a thermal runaway experimental apparatus according to claim 12, wherein, after the turning off the cooling mechanism when T₂ < 0°C, the method for using the thermal runaway experimental apparatus further comprises:
after the battery cell is left to rest for a preset time, acquiring a temperature rise rate R of the surface of the battery cell, a temperature fluctuation M₁ of the surface of the battery cell, and a voltage fluctuation M₂ of the battery cell; and
if R < 0.02°C/min, M₁ < 0.01°C, and M₂ < 0.01 V, removing the battery cell from the reaction chamber.
